(19) Europäisches Patentamt
European Patent Office
Office européen des brevets

(11) EP 4 220 969 A1

(12) **EUROPEAN PATENT APPLICATION**
published in accordance with Art. 153(4) EPC

(43) Date of publication:
**02.08.2023 Bulletin 2023/31**

(21) Application number: **21870962.4**

(22) Date of filing: **14.07.2021**

(51) International Patent Classification (IPC):
***H04B 1/00*** *(2006.01)* ***H04B 1/40*** *(2015.01)*

(52) Cooperative Patent Classification (CPC):
**H04B 1/00; H04B 1/40; H04B 7/02;** Y02D 30/70

(86) International application number:
**PCT/CN2021/106194**

(87) International publication number:
**WO 2022/062584 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2020 CN 202011032784**

(71) Applicant: **GUANGDONG OPPO MOBILE TELECOMMUNICATIONS CORP., LTD.**
**Dongguan, Guangdong 523860 (CN)**

(72) Inventor: **FENG, Bin**
**Dongguan, Guangdong 523860 (CN)**

(74) Representative: **Taor, Simon Edward William et al**
**Venner Shipley LLP**
**200 Aldersgate**
**London EC1A 4HD (GB)**

# (54) RF DRX DEVICE, RF TRANSCEIVER SYSTEM, AND COMMUNICATION APPARATUS

(57) A radio-frequency DRX device having a low-frequency receiving port, a plurality of medium-high frequency receiving ports, and a plurality of antenna ports. The radio-frequency DRX device includes: a first receiving circuit (110) configured to perform filtering and amplification processing on the received low-frequency signal to selectively output a low-frequency signal in any frequency band to the low-frequency receiving port; a first switching unit (120) configured to selectively switch on a receiving path for any one of the low-frequency signals; a second receiving circuit (130) configured to perform filtering and amplification processing on the received medium-high frequency signals to selectively output the medium-high frequency signals in a plurality of frequency bands to a corresponding medium-high frequency receiving port; and a second switching unit (140) configured to selectively switch on a receiving path for any one of the medium-high frequency signals.

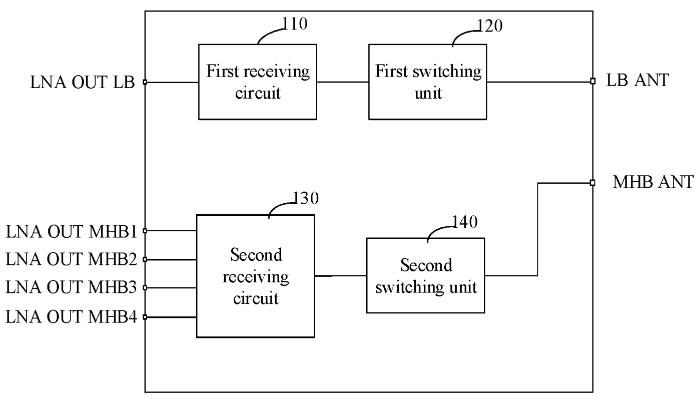


FIG. 1

EP 4 220 969 A1

## Description

## CROSS-REFERENCE TO RELATED APPLICATIONS

This application claims priorities to Chinese Patent Applications No. 2020110327848, entitled "RADIO-FREQUENCY DRX DEVICE, RADIO-FREQUENCY TRANSCEIVING SYSTEM, AND COMMUNICATION APPARATUS", filed with China National Intellectual Property Administration on September 27, 2020, the entire disclosure of which is incorporated herein by reference.

## FIELD

The present disclosure relates to the field of radio-frequency technologies, and particularly, to a radio-frequency DRX (Diversity Receive) device, a radio-frequency transceiving system, and a communication apparatus.

## BACKGROUND

The statements herein provide only background information relevant to the present disclosure and do not necessarily constitute exemplary related art.

With the development and advancement of technology, in order to satisfy the increasing demands of various network standards and solve a problem of PCB layout shortage, the highly integrated and miniaturized devices have become a development trend. From an initial Phase 2 product that supports only a single frequency band to a Phase 7 product supporting all integrated standards, an integration level of the device is increasingly higher, and a packaged size thereof also becomes increasingly smaller. Generally, a receiving module is defined in a 2G, 3G, or 4G architecture design. However, when the receiving module is applied in a radio-frequency transceiving system to receive a radio-frequency signal, a receiving path in the radio-frequency transceiving system has a relatively low sensitivity.

## SUMMARY

Embodiments of the present disclosure provide a radio-frequency DRX device, a radio-frequency transceiving system, and a communication apparatus.

A radio-frequency DRX device has a low-frequency receiving port and a plurality of medium-high frequency receiving ports that are configured to be connected to a radio-frequency transceiver, and a plurality of antenna ports configured to be connected to an antenna. The radio-frequency DRX device includes a first receiving circuit, a first switching unit, a second receiving circuit, and a second switching unit. The first receiving circuit is disposed on a receiving path between the low-frequency receiving port and one of the plurality of antenna ports. The first receiving circuit is configured to receive low-frequency signals in a plurality of frequency bands through the plurality of antenna ports and perform filtering and amplification processing on the received low-frequency signals to selectively output a low-frequency signal in any one of the plurality of frequency bands to the low-frequency receiving port. The first switching unit is connected to the first receiving circuit and the one of the plurality of antenna ports. The first switching unit is configured to selectively switch on a receiving path for any one of the low-frequency signals. The second receiving circuit is disposed on a receiving path between the plurality of medium-high frequency receiving ports and another one of the plurality of antenna ports. The second receiving circuit is configured to receive medium-high frequency signals in a plurality of frequency bands through the plurality of antenna ports and perform filtering and amplification processing on the received medium-high frequency signals to selectively output a medium-high frequency signal in at least one of the plurality of frequency bands to a corresponding one of the plurality of medium-high frequency receiving ports. The second switching unit is connected to the second receiving circuit and the another one of the plurality of antenna ports. The second switching unit is configured to selectively switch on a receiving path for any one of the medium-high frequency signals.

A radio-frequency transceiving system includes the above-mentioned radio-frequency DRX device, a first antenna, a second antenna, and a radio-frequency transceiver. The first antenna is connected to one of the plurality of antenna ports of the radio-frequency DRX device and configured to transceiver the low-frequency signals. The second antenna is connected to another one of the plurality of antenna ports of the radio-frequency DRX device and configured to transceive the medium-high frequency signals. The radio-frequency transceiver is connected to the plurality of medium-high frequency receiving ports and the low-frequency receiving port of the radio-frequency DRX device.

A communication apparatus includes the radio-frequency transceiving system as described above.

By integrating the first receiving circuit, the second receiving circuit, the first switching unit, and the second switching unit in the above-mentioned radio-frequency DRX device, radio-frequency transceiving system, and communication apparatus, a receiving control of a plurality of low-frequency and medium-high frequency signals can be achieved, thereby omitting a corresponding filtering circuit from that is externally disposed on a traditional radio-frequency DRX device for receiving the plurality of low-frequency and medium-high frequency signals. In this way, an integration level of the radio-frequency DRX device can be increased, while a cascade noise coefficient of a receiving path for the low-frequency signals and a cascade noise coefficient of a receiving path for the medium-high frequency signals can be lowered, thereby improving a sensitivity of the radio-frequency DRX device, radio-frequency transceiving system, and communication apparatus.

One or more of the embodiments of the present disclosure are described in detail below in combination with the accompanying drawings. Other features, objects and advantages of the present disclosure will become apparent in view of the specification, the accompanying drawings, and the claims as attached.

## BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without paying creative efforts.

FIG. 1 is a first structural block diagram of a radio-frequency DRX device according to an embodiment.

FIG. 2 is a second structural block diagram of a radio-frequency DRX device according to an embodiment.

FIG. 3 is a third structural block diagram of a radio-frequency DRX device according to an embodiment.

FIG. 4 is a fourth structural block diagram of a radio-frequency DRX device according to an embodiment.

FIG. 5 is a fifth structural block diagram of a radio-frequency DRX device according to an embodiment.

FIG. 6 is a sixth structural block diagram of a radio-frequency DRX device according to an embodiment.

FIG. 7a is a schematic diagram of pins of the radio-frequency DRX device shown in FIG. 5.

FIG. 7b is a schematic diagram of a package structure of the radio-frequency DRX device shown in FIG. 5.

FIG. 8a is a schematic diagram of pins of the radio-frequency DRX device shown in FIG. 6.

FIG. 8b is a schematic diagram of a package structure of the radio-frequency DRX device shown in FIG. 6.

FIG. 9 is a structural block diagram of a radio-frequency transceiving system according to an embodiment.

FIG. 10 is a structural block diagram of a radio-frequency transceiving system according to another embodiment.

## DETAILED DESCRIPTION

In order to facilitate understanding of the present disclosure and to clarify the above-mentioned objects, features, and advantages of the present disclosure, specific embodiments of the present disclosure are described in detail below in conjunction with the accompanying drawings. In the following description, many specific details are provided to facilitate full understanding of the present disclosure. Preferred embodiments of the present disclosure are illustrated by means of the accompanying drawings. However, the present disclosure can be implemented in various forms and is not limited to the embodiments described herein. On the contrary, these embodiments are merely provided to facilitate thorough and comprehensive understanding of the content of the present disclosure. The present disclosure can be implemented in various manners other than those described herein, and similar improvements can be made by those skilled in the art without contradicting the intent of the present disclosure. Therefore, the present disclosure is not limited by specific embodiments disclosed below.

In addition, the term "first" or "second" is only for descriptive purposes, and it cannot be indicating or implying relative importance or implicitly indicating the number of indicated technical features. Therefore, the features associated with "first" or "second" can explicitly or implicitly include at least one of the features. In the description of the present disclosure, "plurality of" means at least two, unless otherwise specifically indicated. In the present disclosure, "a number of" means at least one, unless otherwise specifically indicated.

A radio-frequency DRX device according to the embodiments of the present disclosure can be applied to a communication apparatus having wireless communication capabilities. The communication apparatus may be a handheld apparatus, a vehicle-mounted apparatus, a wearable apparatus, a computing apparatus, any other processing apparatuses connected to a wireless modem, a User Equipment (UE) in various forms (e.g., a mobile phone), or a Mobile Station (MS), etc. For ease of description, the above-mentioned apparatuses can be collectively referred to as the communication apparatus. A network device may include a base station, an access point, etc.

As illustrated in FIG. 1, an embodiment of the present disclosure provides a radio-frequency DRX device. The radio-frequency DRX device can be regarded as a DRX module. In an embodiment, the radio-frequency DRX device is a multi-frequency band DRX device capable of implementing diversity reception and primary reception of a plurality of low-frequency and medium-high frequency signals in different frequency bands. The plurality of low-frequency and medium-high frequency signals in the different frequency bands may include low-, medium-, and high-frequency signals in different frequency bands of 2G, 3G, or 4G signals.

In an embodiment, the radio-frequency DRX device can be regarded as a package structure. The radio-frequency DRX device has a low-frequency receiving port **LNA OUT LB,** a plurality of medium-high frequency receiving ports **LNA OUT MHB 1, LNA OUT MHB 2, LNA OUT MHB 3, LNA OUT MHB 4,** and a plurality of antenna ports **LB ANT, MHB ANT.** The low-frequency receiving port **LNA OUT LB** and the plurality of medium-high frequency receiving ports **LNA OUT MHB 1, LNA OUT MHB 2, LNA OUT MHB 3, LNA OUT MHB 4** are configured to be connected to a radio-frequency transceiver. The plurality of antenna ports **LB ANT, MHB ANT** is configured to be connected to an antenna. The low-frequency receiving port **LNA OUT LB,** the medium-high frequency receiving ports **LNA OUT MHB,** and the antenna ports **LB ANT, MHB ANT** provided in such a device can be regarded as radio-frequency pin terminals of the radio-frequency DRX device for connecting to various external devices. Specifically, the low-frequency receiving port **LNA OUT LB** and the plurality of medium-high frequency receiving ports **LNA OUT MHB** may be configured to be connected to the radio-frequency transceiver. The antenna ports **LB ANT, MHB ANT** may be configured to be connected to the antenna. According to an embodiment of the present disclosure, at least two antenna ports **LB ANT, MHB ANT** are provided, and the at least two antenna ports at least include a first antenna port **LB ANTLB ANT** and a second antennal port **MHB ANT.**

The radio-frequency DRX device includes a first receiving circuit 110, a first switching unit 120, a second receiving circuit 130, and a second switching unit 140.

The first receiving circuit 110 is disposed on a receiving path between the low-frequency receiving port **LNA OUT LB** and one antenna port **LB ANT.** The first receiving circuit 110 is configured to receive low-frequency signals in a plurality of frequency bands through the antenna port **LB ANT** and perform filtering and amplification processing on the received low-frequency signals to selectively output a low-frequency signal in any frequency band to the low-frequency receiving port **LNA OUT LB.** Specifically, frequency bands of a plurality of low-frequency signals include at least two or any combination of B8, B26, B12, B17, B20, B28A, and B28B frequency bands, in which at least one overseas frequency band of B12, B17, B20, B28A, and B28B frequency bands is required to be included. For example, the first antenna port **LB ANTLB ANT** is configured to receive a plurality of low-frequency signals received by the antenna, and the first receiving circuit 110 may perform the filtering and amplification processing on the plurality of inputted low-frequency signals to output the plurality of inputted low-frequency signals to the corresponding low-frequency receiving port **LNA OUT LB,** thereby implementing a receiving control of the plurality of low-frequency signals.

The first switching unit 120 is connected to one antenna port **LB ANT** and the first receiving circuit 110. The first switching unit 120 is configured to selectively switch on a receiving path of any one of the low-frequency signals. The first switching unit 120 includes a plurality of first terminals and a second terminal. The plurality of first terminals of the first switching unit 120 is connected to the first receiving circuit 110. The second terminal of the first switching unit 120 is connected to the first antenna port **LB ANT.** The first switching unit 120 is configured to switch on a receiving path for a low-frequency signal in any one of frequency bands.

The second receiving circuit 130 is disposed on a receiving path between the medium-high frequency receiving ports **LNA OUT MHB** and another antenna port **MHB ANT.** The second receiving circuit 130 is configured to receive medium-high frequency signals in a plurality of frequency bands through the antenna port **MHB ANT** and perform filtering and amplification processing on the received medium-high frequency signals to selectively output the medium-high frequency signals in the plurality of frequency bands to the plurality of corresponding medium-high frequency receiving ports **LNA OUT MHB.** The plurality of frequency bands of the medium-high frequency signals may include B1, B4, B3, B25, B34, B66, B39, B32, B7, B40, and B41 frequency bands. For example, the second antenna port **MHB ANT** is configured to receive a plurality of medium-high frequency signals received by the antenna, and the second receiving circuit 130 is configured to perform the filtering and amplification processing on the plurality of inputted medium-high frequency signals to output the plurality of inputted medium-high frequency signals to the plurality of corresponding medium-high frequency receiving ports **LNA OUT MHB,** thereby implementing a receiving control of the plurality of medium-high frequency signals.

The second switching unit 140 is connected to another antenna port **MHB ANT** and the second receiving circuit 130. The second switching unit 140 is configured to selectively switch on a receiving path for any one of the medium-high frequency signals. The second switching unit 140 includes a plurality of first terminals and a second terminal. The plurality of first terminals of the second switching unit 140 is connected to the second receiving circuit 130. The second terminal of the second switching unit 140 is connected to the second antenna port **MHB ANT.** The second switching unit 140 is configured to switch on a receiving path for a medium-frequency signal in any frequency band or a receiving path for a high-frequency signal in any frequency band.

The receiving path for the low-frequency signals in the radio-frequency DRX device is composed of a plurality of cascaded devices, i.e., the first antenna port **LB ANTLB ANT,** the first switching unit 120, the first receiving circuit 110, and the low-frequency receiving port **LNA OUT LB.** The receiving path for the medium-high frequency signals in the radio-frequency DRX device is composed of a plurality of cascaded devices, i.e., the second antenna port **MHB ANT,** the second switching unit 140, the second receiving circuit 130, and the medium-high frequency receiving ports **LNA OUT MHB.** A cascade noise coefficient thereof can be calculated in accordance with Equation 1.

$$NF = N1+(N2-1)/G1+(N3-1)/G1*G2+(N4-1)/G1*G2*G3+\cdots \qquad \text{(Equation 1)},$$

where N1 to N4 represent noise coefficients of a first level to a fourth level, respectively; and G1 to G3 represent gains of the first level to the third level, respectively. A final cascade noise coefficient of the entire receiving path can be calculated based on the Equation 1. A noise coefficient of the low noise amplifier can be changed by adjusting a gain coefficient of the low noise amplifier on the receiving path, and thus the cascade noise coefficient can be changed.

Sensitivity is a minimum input signal level that a communication apparatus can receive while satisfying a certain Bit Error Ratio (BER) performance. The 3rd Generation Partnership Project (3GPP) protocol specifies that a bit error ratio is required to be smaller than 5%, i.e., a throughput is higher than 95%, in a test of sensitivity index. In the above case, the measured minimum input level signal is sensitivity of the communication apparatus. The sensitivity may be calculated by a theoretical equation, specifically as illustrated in Equation 2:

$$\text{Sensitivity} = -174 + 10\lg BW + NF \qquad \text{(Equation 2)}$$

where BW denotes to a bandwidth of an operating frequency band of the communication apparatus, in the unit of Hz; and NF denotes to a cascade noise coefficient of the communication apparatus, in the unit of dB. The sensitivity of the communication apparatus may be correspondingly improved by reducing the cascade noise coefficient.

The first receiving circuit 110, the first switching unit 120, the second receiving circuit 130, and the second switching unit 140 are integrated in the radio-frequency DRX device, thereby implementing a receiving control of the plurality of low-frequency and medium-high frequency signals. In this way, a corresponding filtering circuit externally arranged on a traditional radio-frequency DRX device and configured to receive the low-frequency and medium-high frequency signals can be omitted. Therefore, an integration level of the radio-frequency DRX device can be increased. Meanwhile, a link loss on the receiving path can be reduced by omitting the external filtering circuit, so as to reduce a cascade noise coefficient of the receiving paths for any low- and medium-high frequency signals, thereby improving sensitivity of the radio-frequency DRX device. The low-frequency receiving port **LNA OUT LB** and the medium-high frequency receiving port **LNA OUT MHB** of the radio-frequency DRX device may be directly connected to the radio-frequency transceiver to reduce connections of radio-frequency lines and the complexity of mainboard layout and wirings.

As illustrated in FIG. 2, in an embodiment, the first receiving circuit 110 includes a first low noise amplifier 111, a third switching unit 113, and a plurality of first filtering circuits 115. The third switching unit 113 includes a first terminal and a plurality of second terminals. The first terminal of the third switching unit 113 is connected to an input terminal of the first low noise amplifier 111. The first low noise amplifier 111 has an output terminal connected to the low-frequency receiving port **LNA OUT LB.** Each second terminal of the third switching unit 113 is connected to the first switching unit 120 through one first filtering circuit 115. The first low noise amplifier 111 is configured to perform amplification processing on the filtering-processed low-frequency signal. The third switching unit 113 is configured to selectively switch on a radio-frequency path between any first filtering circuit 115 and the first low noise amplifier 111.

In an embodiment, the first filtering circuit 115 is configured to perform filtering processing on the received low-frequency signals. Frequency bands of low-frequency signals outputted by the respective first filtering circuits 115 are different from each other. The first filtering circuit 115 may include a filter, and the filter only allows a low-frequency signal in a predetermined frequency band to pass through. For example, when the frequency bands of the plurality of low-frequency signals are seven different frequency bands including B8, B26, B 12, B17, B20, B28A, and B28B frequency bands, seven first filtering circuits 115 (i.e., seven filters) may be correspondingly disposed to perform filtering processing on the seven low-frequency signals. After performing the filtering processing on the seven first filtering circuits 115, the seven low-frequency signals including B8, B26, B12, B17, B20, B28A, and B28B may be correspondingly outputted to the third switching unit 113.

In an embodiment, at least two low-frequency signals in the same frequency band or close frequency bands may share one same first filtering circuit 115. For example, low-frequency signals in two frequency bands including B12 and B17 may share the same first filtering circuit 115. The first filtering circuit 115 may output the low-frequency signals in two frequency bands including B12 and B17. The low-frequency signals in two frequency bands including B20 and B28A may also share the same first filtering circuit 115. The first filtering circuit 115 may output the low-frequency signals in two frequency bands including B20 and B28A. That is, five first filtering circuits 115 may be used to perform the filtering processing on the seven low-frequency signals.

In an embodiment, the filter may be a band-pass filter, a low-pass filter, or the like. It should be noted that in the embodiments of the present disclosure, a type of filter in each of the first filtering circuits 115 is not further defined, and a suitable filter may be selected based on a frequency band of a low-frequency signal to be filtering-processed.

As an example, the number of first filtering circuits 115 is five, and the first switching unit 120 and the third switching unit 113 are all radio-frequency Single-Pole Five-Throw (SP5T) switches. A single terminal (i.e., a second terminal) of the radio-frequency SP5T switch (i.e., the first switching unit 120) is connected to the first antenna port LB ANT. Each selection terminal (i.e., a first terminal) of the radio-frequency SP5T switch is connected to one selection terminal (i.e., the second terminal) of the third switching unit 113 through one first filtering circuit 115. A single terminal (i.e., the first terminal) of the radio-frequency SP5T switch (i.e., the third switching unit 113) is connected to the low-frequency receiving port **LNA OUT LB** through the first low noise amplifier 111. The first switching unit 120 may switch the received low-frequency signals in the plurality of frequency bands to different first filtering circuits 115 (i.e., filtering channels), thereby implementing the filtering processing on the different low-frequency signals and outputting the low-frequency signals to the third switching unit 113. The third switching unit 113 may receive the filtering-processed low-frequency signals in the plurality of frequency bands and selectively switch on a path between the single terminal and any selection terminal, to selectively transmit the low-frequency signal in any one of the frequency bands to the first low noise amplifier 111, thereby performing the amplification processing on the low-frequency signal in any one of the frequency bands. Therefore, a receiving control of the low-frequency signal in any one of the frequency bands can be achieved.

As illustrated in FIG. 3, in an embodiment, the second switching unit 140 includes a first terminal and a plurality of second terminals. The first terminal of the second switching unit 140 is connected to the another antenna port **MHB ANT.** The second receiving circuit 130 includes a second low noise amplifier 131, a plurality of second filtering circuits 133, and a fourth switching unit 135. Each of the plurality of second filtering circuits 133 is connected to a corresponding one second terminal of the second switching unit 140. The second filtering circuit 133 is configured to perform filtering processing on the received medium-high frequency signal and transmit the filtering-processed medium-high frequency signal to an input terminal of the second low noise amplifier 131 through the fourth switching unit 135. Frequency bands of medium-high frequency signals outputted by the respective second filtering circuits 133 are different from each other. The fourth switching unit 135 includes a first terminal and a plurality of second terminals. Each second terminal of the fourth switching unit 135 is connected to a corresponding one second filtering circuit 133. The first terminal of the fourth switching unit 135 is connected to the input terminal of the second low noise amplifier 131. An output terminal of the second low noise amplifier 131 is connected to one of the medium-high frequency receiving ports and configured to perform amplification processing on the received medium-high signal. The fourth switching unit 135 is configured to selectively switch on a radio-frequency path between at least one second filtering circuit 133 and at least one second low noise amplifier 131.

The second filtering circuit 133 may include a filter, and the filter only allows a medium-high frequency signal in a predetermined frequency band to pass through. For example, when the frequency bands of the plurality of medium-high frequency signals may be eleven different frequency bands including B7, B41, B1, B4, B66, B34, B40, B39, B3, B25, and B32 frequency bands, eleven second filtering circuits 133 (i.e., eleven filters) may be correspondingly disposed to perform filtering processing on the eleven medium-high frequency signals. After performing the filtering processing on the eleven second filtering circuits 133, the eleven medium-high frequency signals including B7, B41, B1, B4, B66, B34, B40, B39, B3, B25, and B32 may be correspondingly outputted to the fourth switching unit 135.

In an embodiment, at least two medium-high frequency signals in the same frequency band or close frequency bands may share the same second filtering circuit 133. For example, the medium-frequency signals in three frequency bands including B1, B4, and B66 may share the same second filtering circuit 133. The second filtering circuit 133 may output medium-frequency signals in three frequency bands including B1, B4, and B66. That is, nine second filtering circuits 133 may be used to perform the filtering processing on the eleven low-frequency signals.

In an embodiment, the second filtering circuits 133 may share the same first terminal of the second switching unit 140. For example, the second switching unit 140 may be a radio-frequency Single-Pole Seventh-Throw (SP7T) switch. Two second filtering circuits 133 for performing filtering processing on medium-high frequency signals in B39 and B34 frequency bands may share the same first terminal (e.g., a contact 4) of the second switching unit 140. Two second filtering circuits 133 for performing filtering processing on medium-high frequency signals in B1/B4 B66 and B3 frequency bands may share the same first terminal (e.g., a contact 5) of the second switching unit 140, and the other second filtering circuits 133 may be connected to the first terminals of the second switching unit 140 in one-to-one correspondence.

In embodiment of the present disclosure, the number of the second filtering circuits 133 connected to the same first terminal of the second switching unit 140 and frequency bands of the medium-high frequency signals subjected to the filtering processing of the connected second filtering circuits 133 are not further limited, which may be set based on a frequency band range of each of the medium-high frequency signals.

In an embodiment, the second receiving circuit 130 may include a plurality of second low noise amplifiers 131. The input terminal of the second low noise amplifier 131 is connected to the fourth switching unit 135. The output terminal of the second low noise amplifier 131 is directly connected to the medium-high frequency receiving port **LNA OUT MHB.** In presence of the plurality of second low noise amplifiers 131, the fourth switching unit 135 may include a plurality of first terminals. The number of the first terminals of the fourth switching unit 135 and the number of the medium-high frequency receiving ports **LNA OUT MHB** are both equal to the number of the second low noise amplifiers 131. That is, each of the first terminals of the fourth switching unit 135 corresponds to the input terminal of one of the second low noise amplifiers 131. The output terminals of one of the second low noise amplifiers 131 is connected to a corresponding one of medium-high frequency interfaces.

As illustrated in FIG. 4, in an embodiment, the second receiving circuit 130 includes three second low noise amplifiers 131, the plurality of second filtering circuits 133, and the fourth switching unit 135. Specifically, the fourth switching unit 135 includes three radio-frequency switches. Each radio frequency switch includes one first terminal and a plurality of second terminals. Each second terminal of the radio-frequency switch is connected to a corresponding one second filtering circuit 133. The first terminal of each of the three radio-frequency switches is connected to one of the medium-high frequency receiving ports **LNA OUT MHB** through one of the second low noise amplifiers 131.

The three radio-frequency switches may include a first radio-frequency switch, a second radio-frequency switch, and a third radio-frequency switch. In an embodiment, the radio-frequency switch is a radio-frequency Single-Pole Third-Throw (SP3T) switch.

A first terminal of the first radio-frequency switch is connected to the input terminal of one second low noise amplifier 131. A second terminal of the first radio-frequency switch is connected to one second filtering circuit 133 and configured to receive a filtering-processed signal in the B7 frequency band. Another second terminal of the first radio-frequency switch is connected to another second filtering circuit 133 and configured to receive a filtering-processed signal in the B41 frequency band. The first radio-frequency switch is configured to selectively switch on a receiving path for the signal in the B7 frequency band or a receiving path for the signal in the B41 frequency band. That is, the first radio-frequency switch can selectively output the signal in the B7 or B41 frequency band to the second low noise amplifier 131 connected thereto.

A first terminal of the second radio-frequency switch is connected to the input terminal of another second low noise amplifier 131. A second terminal of the second radio-frequency switch is connected to one second filtering circuit 133 and configured to receive the filtering-processed signals in the B1, B4, and B66 frequency bands. Another second terminal of the second radio-frequency switch is connected to another second filtering circuit 133 and configured to receive a filtering-processed signal in the B34 frequency band. Yet another second terminal of the second radio-frequency switch is connected to yet another second filtering circuit 133 and configured to receive a filtering-processed signal in the B40 frequency band. The second radio-frequency switch is configured to selectively switch on a path between the first terminal and any one of the second terminals. That is, the second radio-frequency switch can selectively output the signal in the B1, B3, B66, B34, or B40 frequency band to the second low noise amplifier 131 connected thereto.

A first terminal of the third radio-frequency switch is connected to yet another input terminal of the second low noise amplifier 131. One second terminal of the third radio-frequency switch is connected to one second filtering circuit 133 and configured to receive a filtering-processed signal in the B39 frequency band. Another second terminal of the third radio-frequency switch is connected to another second filtering circuit 133 and configured to receive a filtering-processed signal in the B3 frequency band. Yet another second terminal of the third radio-frequency switch is connected to yet another second filtering circuit 133 and configured to receive a filtering-processed signal in the B25 frequency band. The third radio-frequency switch is configured to selectively switch on a receiving path for the signal in the B3, B39, or B25 frequency band. That is, the third radio-frequency switch can selectively output the signal in the B3, B39, or B25 frequency band to the second low noise amplifier 131 connected thereto.

It can be understood that the second filtering circuit 133 is the same as the second filtering circuit 133 as illustrated in FIG. 3, and details thereof are not described herein.

It should be noted that, multiple second filtering circuits 133 connected to the same radio-frequency switch can perform filtering processing the medium-high frequency signals in close frequency bands. In the embodiments of the present disclosure, the second filtering circuits 133 correspondingly connected to the first radio-frequency switch, the second radio-frequency switch, and the third radio-frequency switch are not further defined, and may be set based on actual requirements.

As illustrated in FIG. 5, in an embodiment, the second receiving circuit 130 includes four second low noise amplifiers 131, the plurality of second filtering circuits 133, and the fourth switching unit 135. Compared with the radio-frequency DRX device illustrated in FIG. 4, the second receiving circuit 130 includes an additional second low noise amplifier 131. Meanwhile, the fourth switching unit 135 further includes a fourth radio-frequency switch. A first terminal of the fourth radio-frequency switch is connected to the input terminal of still yet another second low noise amplifier 131. One second terminal of the fourth radio-frequency switch is connected to one second filtering circuit 133 and configured to receive a filtering-processed signal in the B32 frequency band. The other second terminals of the fourth radio-frequency switch may correspond to a plurality of auxiliary ports (for example, **LNA AUX MHB 1, LNA AUX MHB 2,** and **LNA AUX MHB 3)** on the radio-frequency device, for receiving a signal in an add-in frequency band. The add-in frequency band can be understood as a frequency band that requires a filtering circuit and a matching circuit disposed outside the radio-frequency DRX device for performing a receiving control of a signal therein.

Based on the radio-frequency DRX devices illustrated in FIG. 3 to FIG. 5, a low-frequency signal in the B12 frequency band is taken as an example, to briefly explain an operating principle of a receiving path thereof below.

The received signal enters the radio-frequency DRX device through the first antenna port **LB ANT,** and is switched to a B12 path through the first switching unit 120. The low-frequency signal in the B12 frequency band is outputted to the third switching unit 113 through the first filtering circuit 115, and then outputted from the third switching unit 113 to the first low noise amplifier 111. Then, the low-frequency signal in the B12 frequency band is outputted from the first low noise amplifier 111 to the low-frequency receiving port **LNA OUT LB** and to the radio-frequency transceiver. In this way, the reception of the low-frequency signal in the B12 frequency band can be implemented.

Based on the radio-frequency DRX devices illustrated in FIG. 3 to FIG. 5, a high-frequency signal in the B41 frequency band is taken as an example, to briefly explain an operating principle of a receiving path thereof below.

The received signal enters the radio-frequency DRX device from the second antenna port **MHB ANT,** and is switched to a B41 path through the second switching unit 140. The high-frequency signal in the B41 frequency band is outputted to a first radio-frequency switch of the fourth switching unit 135 through the second filtering circuit 133, and then is switched from the first radio-frequency switch to a receiving path where one second low noise amplifier 131 is located. Then, the high-frequency signal in the B41 frequency band is outputted from the second low noise amplifier 131 to the medium-high frequency receiving port **LNA OUT MHB** connected thereto and to the radio-frequency transceiver. In this way, the reception of the high-frequency signal in the B41 frequency band can be implemented.

The radio-frequency DRX devices illustrated in FIG. 3 to FIG. 5 can implement the receiving control of the low-frequency signals in B8, B26, B12, B17, B20, B28A, and B28B frequency bands, without requiring an additional filtering circuit arranged outside the radio-frequency DRX device to support the receiving control of overseas frequency bands such as B12, B17, B20, B28A, and B28B frequency bands. Meanwhile, the radio-frequency DRX devices can also implement the receiving control of the medium-high frequency signals in B1, B4, B3, B25, B34, B66, B39, B32, B7, B40, and B41 frequency bands, thereby increasing the integration level of the radio-frequency DRX device and reducing the cost, which is also conducive to the miniaturization design of the device. In addition, a certain space can be saved for other modules, and thus the performance of other modules in the whole device can be improved. Since the B12, B17, B20, B28A, and B28B receiving paths are all disposed inside the radio-frequency DRX device, link losses of the B12, B17, B20, B28A, and B28B receiving paths for the low-frequency signals can be reduced, thereby reducing cascade noise coefficients and further improving the sensitivity of the radio-frequency DRX device.

As illustrated in FIG. 6, in an embodiment, a plurality of second low noise amplifiers 131 is provided. The radio-frequency DRX device further includes a fifth switching unit 150 disposed on a path between the medium-high frequency receiving port **LNA OUT MHB** and the second low noise amplifier 131. The fifth switching unit 150 includes a plurality of first terminals and a plurality of second terminals. The plurality of the first terminals of the fifth switching unit 150 is connected to the plurality of medium-high frequency receiving ports in one-to-one correspondence. The plurality of second terminals of the fifth switching unit 150 is connected to the output terminal of the plurality of second low noise amplifiers 131 in one-to-one correspondence. For example, when four second low noise amplifiers are provided, the fifth switching unit 150 may be a radio-frequency Four-Pole Four-Throw (4P4T) switch. The radio-frequency 4P4T switch may selectively switch on a path between any one of the second low noise amplifiers 131 and any one of the high-medium frequency receiving ports **LNA OUT MHB.**

Based on the radio-frequency DRX device as illustrated in FIG. 6, the low-frequency signal in the B12 frequency band is taken as an example, to briefly explain an operating principle of a receiving path thereof below.

The received signal enters the radio-frequency DRX device through the first antenna port **LB ANT,** and is switched to the B12 path through the first switching unit 120. The low-frequency signal in the B12 frequency band is outputted to the third switching unit 113 through the first filtering circuit 115, and then outputted to the first low noise amplifier 111 from the third switching unit 113. Then, the low-frequency signal in the B12 frequency band is outputted from the first low noise amplifier 111 to the low-frequency receiving port **LNA OUT LB** and to the radio-frequency transceiver. In this way, the reception of the low-frequency signal in the B12 frequency band can be implemented.

Based on the radio-frequency DRX device as illustrated in FIG. 6, the high-frequency signal in the B41 frequency band is taken as an example, to briefly explain an operating principle of a receiving path thereof below.

The received signal enters the radio-frequency DRX device through the second antenna port **MHB ANT,** and is switched to the B41 path by the second switching unit 140. The high-frequency signal in the B41 frequency band is outputted to the first radio-frequency switch of the fourth switching unit 135 through the second filtering circuit 133, and then switched from the first radio-frequency switch to the receiving path where one of the second low noise amplifiers 131 is located, outputs the signal from the second low noise amplifier 131 to the fifth switching unit 150. Then, the high-frequency signal in the B41 is switched from the fifth switching unit 150 to any one of the medium-high frequency receiving ports **LNA OUT MHB** and outputted to the radio-frequency transceiver. In this way, the reception of the high-frequency signal in the B41 frequency band can be implemented.

The fifth switching unit 150 provided in the radio-frequency DRX device can selectively switch on the path between any one of the second low noise amplifiers 131 and any one of the high-medium frequency receiving ports **LNA OUT MHB,** thereby improving flexibility of the high-medium frequency signal outputted by the radio-frequency DRX device. Compared with the radio-frequency DRX device illustrated in FIG. 2, FIG. 3, and FIG. 4, in the radio-frequency DRX device having the fifth switching unit 150, the second low noise amplifiers 131 are each directly connected to medium-high radio-frequency interfaces, i.e., the receiving paths connected to the respective medium-high frequency receiving ports **LNA OUT MHB** are fixed, thereby reducing the cost and the space occupied by the radio-frequency DRX device. In the meantime, the configuration complexity of a software control of various switching units in the radio-frequency DRX device can also be reduced.

It should be noted that, in the embodiments of the present disclosure, the number of the second low noise amplifiers 131 that may be included in the second receiving circuit 130 and ports of the fourth switching unit 135 may both be set based on the number of medium-high frequency signals and a frequency band range of the medium-high frequency signals. For example, two, three, or four second low noise amplifiers 131 may be provided.

In an embodiment, the radio-frequency DRX device further includes a first control unit 160. The control unit is connected to each of switching units (for example, the first switching unit 120, the second switching unit 140, ..., and the fifth switching unit), and the control unit is configured to control turn-on/off of each of the switching units. The control unit 140 may be a Mobile Industry Processor Interface (MIPI)-Radio Frequency Front End Control Interface (RFFE) unit, and conforms to control protocols of an RFFE bus. When the control unit is the MIPI-RFFE control unit, the radio-frequency DRX device 10 thereof further has an input pin CLK for clock signals, an input or bidirectional pin SDATAS for single/bidirectional data signals, a power pin VDD, a reference voltage pin VIO, etc.

In an embodiment, the first low noise amplifier 111 and the second low noise amplifier 131 are gain-adjustable amplifier components. The radio-frequency DRX device 10 further includes a second control unit. The second control unit is connected to the first low noise amplifier 111 and each of the second low noise amplifiers 131. The second control unit is configured to adjust the first low noise amplifier 111 to reduce a cascade noise coefficient of the receiving path for the low-frequency signal. The second control unit is further configured to adjust a gain coefficient of each of the second low noise amplifiers 131 to reduce a cascade noise coefficient of the receiving path for the medium-high frequency signal. Further, in consideration of an in-band blocking scenario, a large signal may cause in-band blocking, and thus a gain level of each of the first low-noise amplifiers 111 and a gain level of each of the second low-noise amplifiers 131 may be adjusted to prevent a power of the low-frequency signal and a power of the medium-high frequency signal thereof from being close to or greater than a maximum input power of the radio-frequency transceiver, thereby avoiding damage to the radio-frequency transceiver.

It should be noted that, in the embodiments of the present disclosure, a control logic of each switching unit matches with a control logic of the control unit. In the embodiments of the present disclosure, specific types of the respective switching units and the control unit are not further defined.

In an embodiment, based on the fact that the respective components in the radio-frequency DRX device as illustrated in FIG. 5 may be integrated and packaged in the same packaged module, the respective pins in the radio-frequency DRX device (a packaged chip) correspond to a plurality of ports of the radio-frequency DRX device in one-to-one correspondence, as illustrated in FIG. 7a. Through packaging integration, a packaged specification of the radio-frequency DRX device is illustrated in FIG. 7b. Correspondingly, based on the fact that the respective components in the radio-frequency DRX device as illustrated in FIG. 6 may be integrated and packaged in the same packaged module, the respective pins in the radio-frequency DRX device (the packaged chip) correspond to the plurality of ports configured by the radio-frequency DRX device in one-to-one correspondence, as illustrated in FIG. 8a. Through the packaging integration, the packaged specification of the radio-frequency DRX device is illustrated in FIG. 8b.

In the embodiments of the present disclosure, the integration level of the radio-frequency DRX device is high, and the space occupied by the respective components can be reduced, which is conducive to the miniaturization of the radio-frequency DRX device.

As illustrated in FIG. 9 and FIG. 10, the embodiments of the present disclosure further provide a radio-frequency transceiving system. In an embodiment, the radio-frequency transceiving system includes the radio-frequency DRX device 10 according to any one of the foregoing embodiments, a first antenna **LB Ant1,** a second antenna **MHB Ant2,** and a radio-frequency transceiver 20.

In an embodiment, the first antenna **LB Ant1** is connected to the first antenna port **LB ANT** of the radio-frequency DRX device 10 and can transceive the low-frequency signal. The second antenna **MHB Ant2** is connected to the second antenna port **MHB ANT** of the radio-frequency DRX device 10 and can transceive the medium-high frequency signal. Specifically, the first antenna **LB Ant1** and the second antenna **MHB Ant2** may be any suitable type of antenna. For example, the first antenna **LB Ant1** and the second antenna **MHB Ant2** may be an antenna having a resonant element, formed in at least one of an array antenna structure, a loop antenna structure, a patch antenna structure, a slot antenna structure, a helical antenna structure, a strip antenna, a monopole antenna, or a dipole antenna. Different types of antennas **Ant** may be used for different frequency band combinations of radio-frequency signals. In the embodiments of the present disclosure, a type of the first antenna **LB Anti** and a type of the second antenna **MHB Ant2** are not further defined.

According to the radio-frequency transceiving system, by providing the radio-frequency DRX device 10 in any one of the foregoing embodiments, the link losses of the receiving path for the low-frequency signals and the receiving path for the medium-high frequency signals can be reduced, thereby reducing the cascade noise coefficient of the low-frequency signal receiving path and the cascade noise coefficient of the medium-high frequency signal receiving path, thereby improving sensitivity of the radio-frequency transceiving system.

According to requirements of the communication protocol 3GPP, under a 5MHz test bandwidth, performance index requirements for sensitivity of 4G LTE signal are shown in Table 1 below.

[Table 1] Sensitivity index requirements of the 3GPP protocol

| Frequency band | 5MHz | 10MHz |
|---|---|---|
| Sensitivity (dBm) | -100 | -97 |

The radio-frequency transceiving system illustrated in FIG. 10 is constructed based on the radio-frequency DRX device illustrated in FIG. 6. For the radio-frequency transceiving system as illustrated in FIG. 10, the operating principle of the low-frequency signal in the B12 frequency band is briefly described below.

The received signal enters the radio-frequency DRX device 10 through the first antenna port **LB ANT,** and is switched to the B12 path through the first switching unit 120. The low-frequency signal in the B12 frequency band is outputted to the third switching unit 113 through the first filtering circuit 115, and then outputted from the third switching unit 113 to the first low noise amplifier 111. Then, the low-frequency signal in the B12 frequency band is outputted from the first low noise amplifier 111 to the low-frequency receiving port **LNA OUT LB** and outputted from the low-frequency receiving port **LNA OUT LB** to a receiving port SDR DRX6 of the radio-frequency transceiver. In this way, the reception of the low-frequency signal in the B12 frequency band can be implemented.

In combination with the above equation for calculating sensitivity, when the bandwidth of the operating frequency band is determined, a noise coefficient of the receiving path directly affects a sensitivity index of the radio-frequency transceiving system. Therefore, as shown in Table 2, the noise coefficient of the receiving path for the B12 low-frequency signal is analyzed.

[Table 2] Noise coefficient of the receiving path for the B12 low-frequency signal

| | Gain (dB) | Noise coefficient (dB) | Total noise coefficient (dB) |
|---|---|---|---|
| Insertion loss between the first antenna and a low-frequency transmitting port of the radio-frequency DRX device 10 | -1.4 | 1.4 | 1.4 |
| Inside the radio-frequency DRX device 10 (the first switching unit 120 and the first filtering circuit 115) | -1.8 | 1.8 | 3.2 |
| Inside the radio-frequency DRX device 10 (the first low noise amplifier 111) | 17 | 1.2 | 4.1 |
| Inside the radio-frequency DRX device 10 (the third switching unit 113) + wiring 1 + the radio-frequency transceiver | -11 | 11 | 4.5 |
| **Sensitivity (5 MHz)** | **-102.5** | | |

In Table 2, a link between the first antenna and the first antenna port **LB ANT** of the radio-frequency DRX device 10 includes an antenna socket, a combiner, a filter, and wiring. A passive loss of the entire link is in a frequency band of 699 to 915 MHz, and the passive loss is 1.4 to 1.6 dB. An insertion loss of the first switching unit 120 and an insertion loss of the first filtering circuit 115 are shown in Table 3 and Table 4. A noise coefficient of the first low noise amplifier 111 is shown in Table 5. The wiring 1 may be understood as a wiring between the radio-frequency DRX device 10 and the radio-frequency transceiver 20, and an insertion loss thereof is about 1 dB. A noise coefficient of the radio-frequency transceiver 20 is 10 dB. As shown in Table 2, the obtained sensitivity is -102.5 dBm/5 MHz, which is improved by 1.3 dB compared with sensitivity of the traditional radio-frequency transceiving system, i.e., -101.2 dBm/5 MHz. Meanwhile, the sensitivity index of the radio-frequency transceiving system in the embodiments is higher than that of -10 dBm/5 MHz required by research and development.

[Table 3] Insertion loss of the first switching unit 120

| Frequency band (GHz) | Insertion loss (dB) |
|---|---|
| 0.1-2 | 1.3 |
| 2-4 | 1.5 |
| 4-6 | 1.8 |

[Table 4] Insertion loss of a filter in the first filtering circuit 115

| Frequency band (MHz) | Insertion loss (dB) |
|---|---|
| 729-746 | 1.9 |

[Table 5] Noise coefficients of the first low noise amplifier 111 inside the radio-frequency DRX device 10

| Parameter | Gain (dB) | Noise coefficient (dB) |
|---|---|---|
| Index | 17 | 1.2 |

The first receiving circuit 110, the first switching unit 120, the second receiving circuit 130, and the second switching unit 140 can be integrated in the above radio-frequency transceiving system, thereby supporting the receiving control of overseas frequency bands such as low-frequency signals in the B12, B13, B17, B28A, and B28B frequency bands. In addition, a wiring loss between respective devices in the radio-frequency system and the noise coefficients of the receiving paths can be reduced, and the sensitivity of the radio-frequency transceiving system in the radio-frequency transceiving system can also be enhanced.

The embodiments of the present disclosure further provide a communication apparatus. The communication apparatus includes the radio-frequency transceiving system according to any one of the above embodiments. By providing the radio-frequency transceiving system on the communication apparatus, the communication apparatus can have the improved sensitivity of receiving the medium-frequency signal and the improved wireless communication performance.

Although several embodiments of the present disclosure are described above in a specific and detailed manner, the protection scope of the present disclosure cannot be construed as being limited to these embodiments. It should be noted that various variants and improvements can be made by those skilled in the art without departing from the concept of the present disclosure. These variants and improvements shall be encompassed by the protection scope of present disclosure as defined by the appended claims.

## Claims

**1.** A radio-frequency Diversity Receive (DRX) device, having a low-frequency receiving port and a plurality of medium-high frequency receiving ports that are configured to be connected to a radio-frequency transceiver, and a plurality of antenna ports configured to be connected to an antenna, the radio-frequency DRX device comprising:

a first receiving circuit disposed on a receiving path between the low-frequency receiving port and one of the plurality of antenna ports, the first receiving circuit being configured to receive low-frequency signals in a plurality of frequency bands through the plurality of antenna ports and perform filtering and amplification processing on the received low-frequency signals to selectively output a low-frequency signal in any one of the plurality of frequency bands to the low-frequency receiving port; and
a first switching unit connected to the first receiving circuit and the one of the plurality of antenna ports, the first switching unit being configured to selectively switch on a receiving path for any one of the low-frequency signals;
a second receiving circuit disposed on a receiving path between the plurality of medium-high frequency receiving ports and another one of the plurality of antenna ports, the second receiving circuit being configured to receive medium-high frequency signals in a plurality of frequency bands through the plurality of antenna ports and perform filtering and amplification processing on the received medium-high frequency signals to selectively output a medium-high frequency signal in at least one of the plurality of frequency bands to a corresponding one of the plurality of medium-high frequency receiving ports; and
a second switching unit connected to the second receiving circuit and the another one of the plurality of antenna ports, the second switching unit being configured to selectively switch on a receiving path for any one of the medium-high frequency signals.

**2.** The radio-frequency DRX device according to claim 1, wherein:

the first receiving circuit comprises a first low noise amplifier, a third switching unit, and a plurality of first filtering circuits;
the third switching unit has a first terminal and a plurality of second terminals;
the first terminal of the third switching unit is connected to an input terminal of the first low noise amplifier;
an output terminal of the first low noise amplifier is connected to the low-frequency receiving port;
each of the plurality of second terminals of the third switching unit is connected to the first switching unit through one of the plurality of first filtering circuits;
the first low noise amplifier is configured to perform amplification processing on filtering-processed low-frequency signals; and
the third switching unit is configured to selectively switch on a radio-frequency path between any one of the plurality of first filtering circuits and the first low noise amplifier.

**3.** The radio-frequency DRX device according to claim 2, wherein the third switching unit comprises a radio-frequency Single-Pole Five-Throw (SP5T) switch.

**4.** The radio-frequency DRX device according to claim 3, wherein the plurality of first filtering circuits comprises five first filtering circuits, and wherein the first switching unit is a radio-frequency SP5T switch.

**5.** The radio-frequency DRX device according to claim 2, wherein the low-frequency signals in the plurality of frequency bands at least comprise low-frequency signals in a B8 frequency band, a B26 frequency band, a B12 frequency band, a B17 frequency band, a B20 frequency band, a B28A frequency band, and a B28B frequency band.

**6.** The radio-frequency DRX device according to claim 1, wherein the second switching unit comprises a first terminal and a plurality of second terminals, the first terminal of the second switching unit being connected to the another one of the plurality of antenna ports; and
wherein the second receiving circuit comprises:

at least one second low noise amplifier, an output terminal of each of the at least one second low noise amplifier being connected to a corresponding one of the plurality of medium-high frequency receiving ports, wherein the at least one second low noise amplifier is configured to perform amplification processing on the received medium-high frequency signals;
a plurality of second filtering circuits each connected to a corresponding one of the plurality of second terminals of the second switching unit, the plurality of second filtering circuits being configured to perform filtering processing on the received medium-high frequency signals, wherein frequency bands of medium-high frequency signals outputted by the plurality of second filtering circuits are different from each other; and
a fourth switching unit having a first terminal connected to an input terminal of each of the at least one second low noise amplifier, and second terminals respectively connected to the plurality of second filtering circuits in one-to-one correspondence, the fourth switching unit being configured to selectively switch on a radio-frequency path between at least one of the plurality of second filtering circuits and the at least one second low noise amplifier.

**7.** The radio-frequency DRX device according to claim 6, wherein:

the at least one second low noise amplifier comprises one second low noise amplifier; and

the fourth switching unit has one first terminal connected to the plurality of medium-high frequency receiving ports through the second low noise amplifier, and a plurality of second terminals each connected to a corresponding one of the plurality of second filtering circuits.

**8.** The radio-frequency DRX device according to claim 6, wherein:

the at least one second low noise amplifier comprises three second low noise amplifiers; and
the fourth switching unit comprises three radio-frequency switches, each of the three radio-frequency switches having one first terminal connected to one of the plurality of medium-high frequency receiving ports through one of the three second low noise amplifiers, and a plurality of second terminals each connected to a corresponding one of the plurality of second filtering circuits.

**9.** The radio-frequency DRX device according to claim 5, wherein:

the at least one second low noise amplifier comprises four second low noise amplifiers; and
the fourth switching unit comprises four radio-frequency switches, each of the four radio-frequency switches having one first terminal connected to one of the plurality of medium-high frequency receiving ports through one of the four second low noise amplifiers, and a plurality of second terminals each connected to a corresponding one of the plurality of second filtering circuits.

**10.** The radio-frequency DRX device according to claim 8 or 9, wherein the radio-frequency switch is a radio-frequency Single-Pole Three-Throw (SP3T) switch.

**11.** The radio-frequency DRX device according to claim 10, wherein the second switching unit is a radio-frequency Single-Pole Seventh-Throw (SP7T) switch.

**12.** The radio-frequency DRX device according to claim 9, further having a plurality of auxiliary ports configured to receive a signal in an add-in frequency band, wherein the plurality of auxiliary ports is connected to the plurality of second terminals of one of the four radio-frequency switches.

**13.** The radio-frequency DRX device according to claim 6, wherein:

the at least one second low noise amplifier comprises a plurality of second low noise amplifiers;
the radio-frequency DRX device further comprises a fifth switching unit, the fifth switching unit having a plurality of first terminals connected to the plurality of medium-high frequency receiving ports in one-to-one correspondence, and a plurality of second terminals connected to output terminals of the plurality of second low noise amplifiers in one-to-one correspondence.

**14.** The radio-frequency DRX device according to claim 1, wherein the medium-high frequency signals in the plurality of frequency bands comprise medium-high frequency signals in a B1 frequency band, a B4 frequency band, a B3 frequency band, a B25 frequency band, a B34 frequency band, a B66 frequency band, a B39 frequency band, a B32 frequency band, a B7 frequency band, a B40 frequency band, and a B41 frequency band.

**15.** The radio-frequency DRX device according to claim 1, wherein the radio-frequency DRX device is a multi-frequency band DRX device configured to implement diversity reception and primary reception of low- and medium-high frequency signals in a plurality of different frequency bands.

**16.** A radio-frequency transceiving system, comprising:

the radio-frequency DRX device according to any one of claims 1 to 15;
a first antenna connected to one of the plurality of antenna ports of the radio-frequency DRX device and configured to transceiver the low-frequency signals;
a second antenna connected to another one of the plurality of antenna ports of the radio-frequency DRX device and configured to transceive the medium-high frequency signals; and
a radio-frequency transceiver connected to the plurality of medium-high frequency receiving ports and the low-frequency receiving port of the radio-frequency DRX device.

**17.** A communication apparatus, comprising the radio-frequency transceiving system according to claim 16.

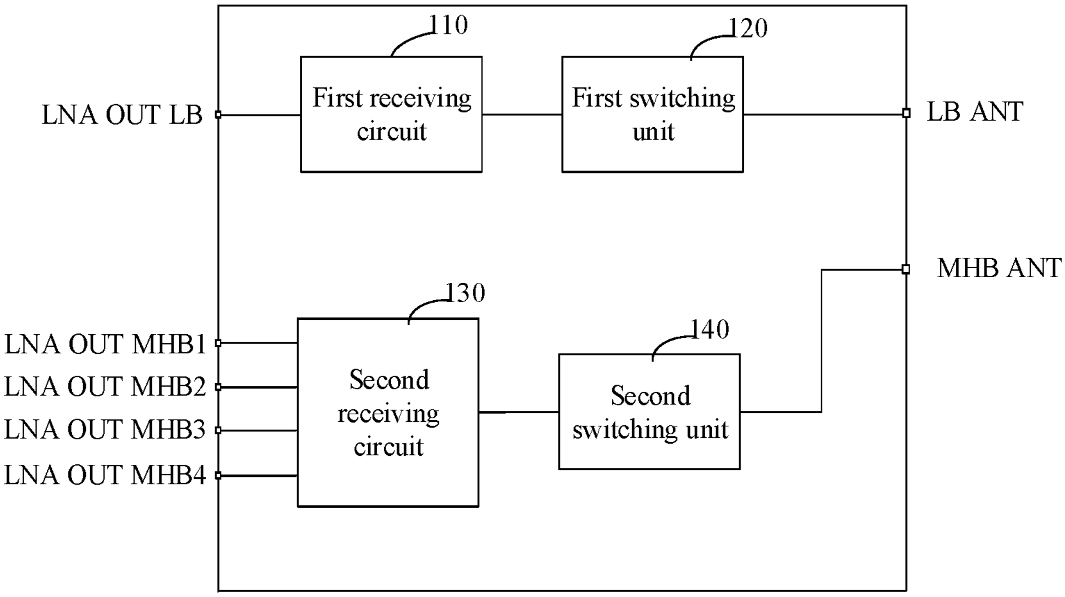
110
120
LNA OUT LB
First receiving circuit
First switching unit
LB ANT
MHB ANT
130
140
LNA OUT MHB1
LNA OUT MHB2
LNA OUT MHB3
LNA OUT MHB4
Second receiving circuit
Second switching unit

FIG. 1

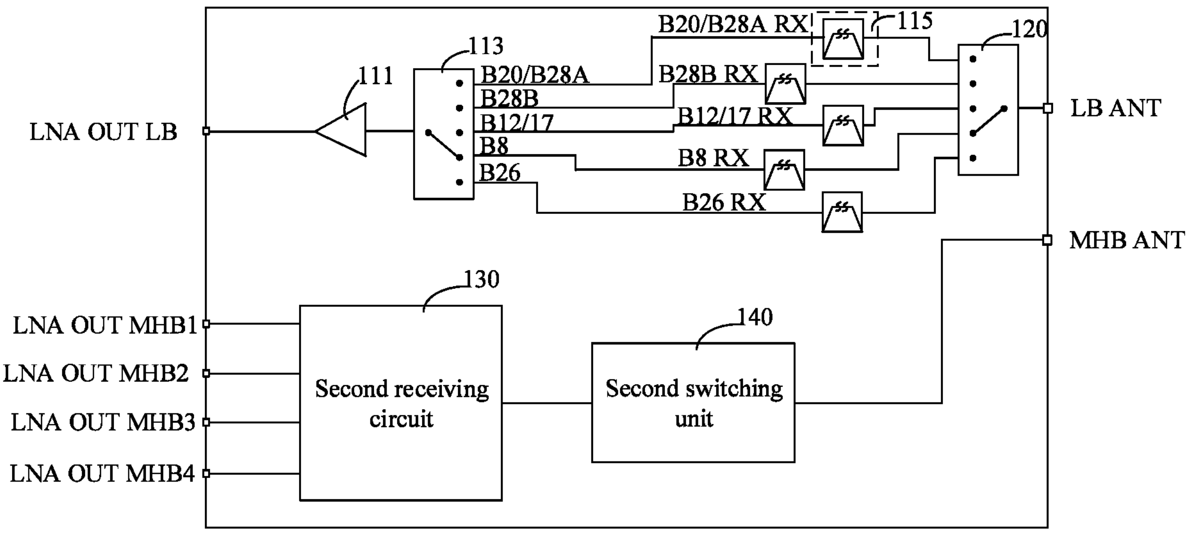
B20/B28A RX
115
120
113
111
B20/B28A
B28B
B12/17
B8
B26
B28B RX
B12/17 RX
B8 RX
B26 RX
LNA OUT LB
LB ANT
MHB ANT
130
140
LNA OUT MHB1
LNA OUT MHB2
LNA OUT MHB3
LNA OUT MHB4
Second receiving circuit
Second switching unit

FIG. 2

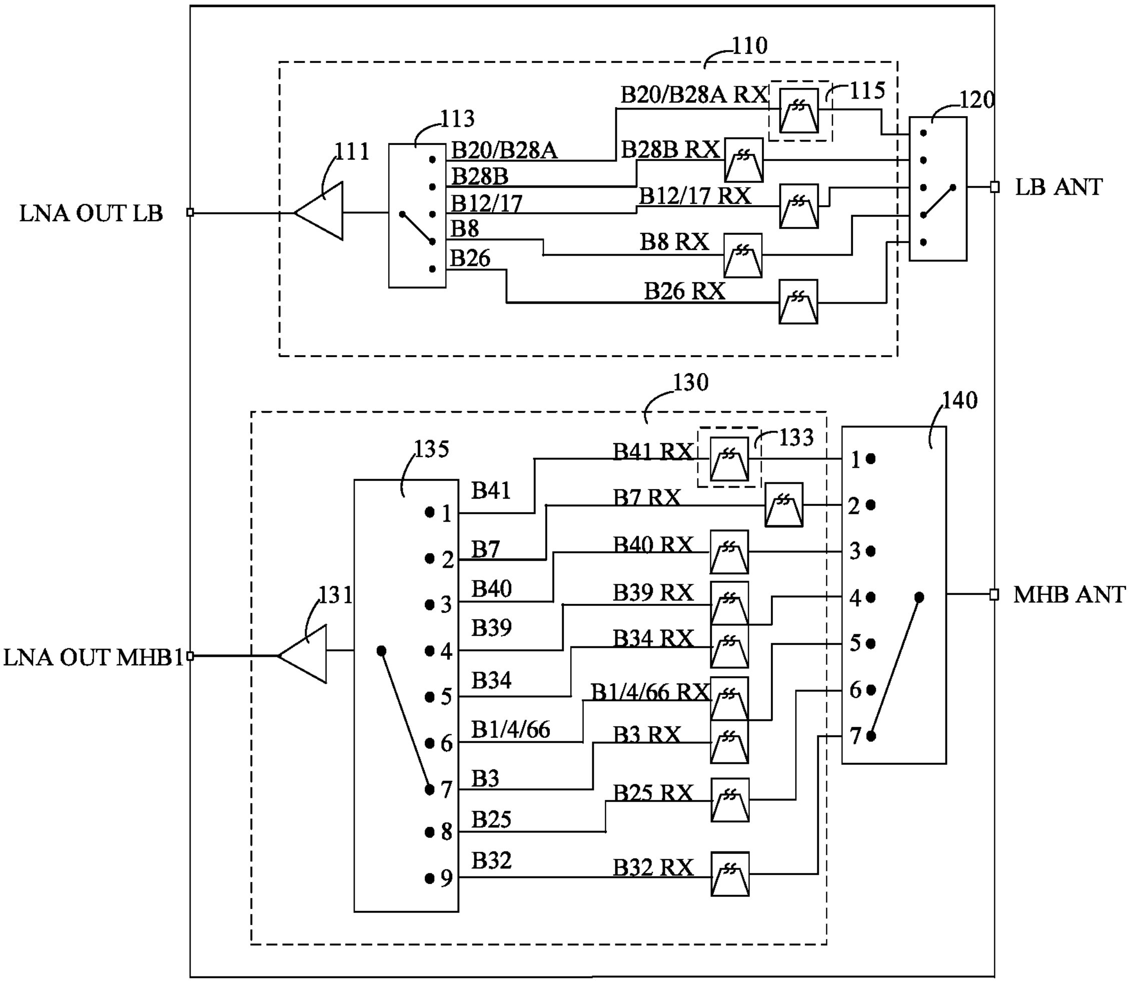

110
B20/B28A RX
115
120
113
111
B20/B28A
B28B RX
B28B
B12/17
B12/17 RX
LB ANT
LNA OUT LB
B8
B8 RX
B26
B26 RX
130
140
133
B41 RX
135
B41
B7 RX
B7
B40 RX
B40
B39 RX
131
B39
B34 RX
LNA OUT MHB1
MHB ANT
B34
B1/4/66 RX
B1/4/66
B3 RX
B3
B25 RX
B25
B32
B32 RX


FIG. 3

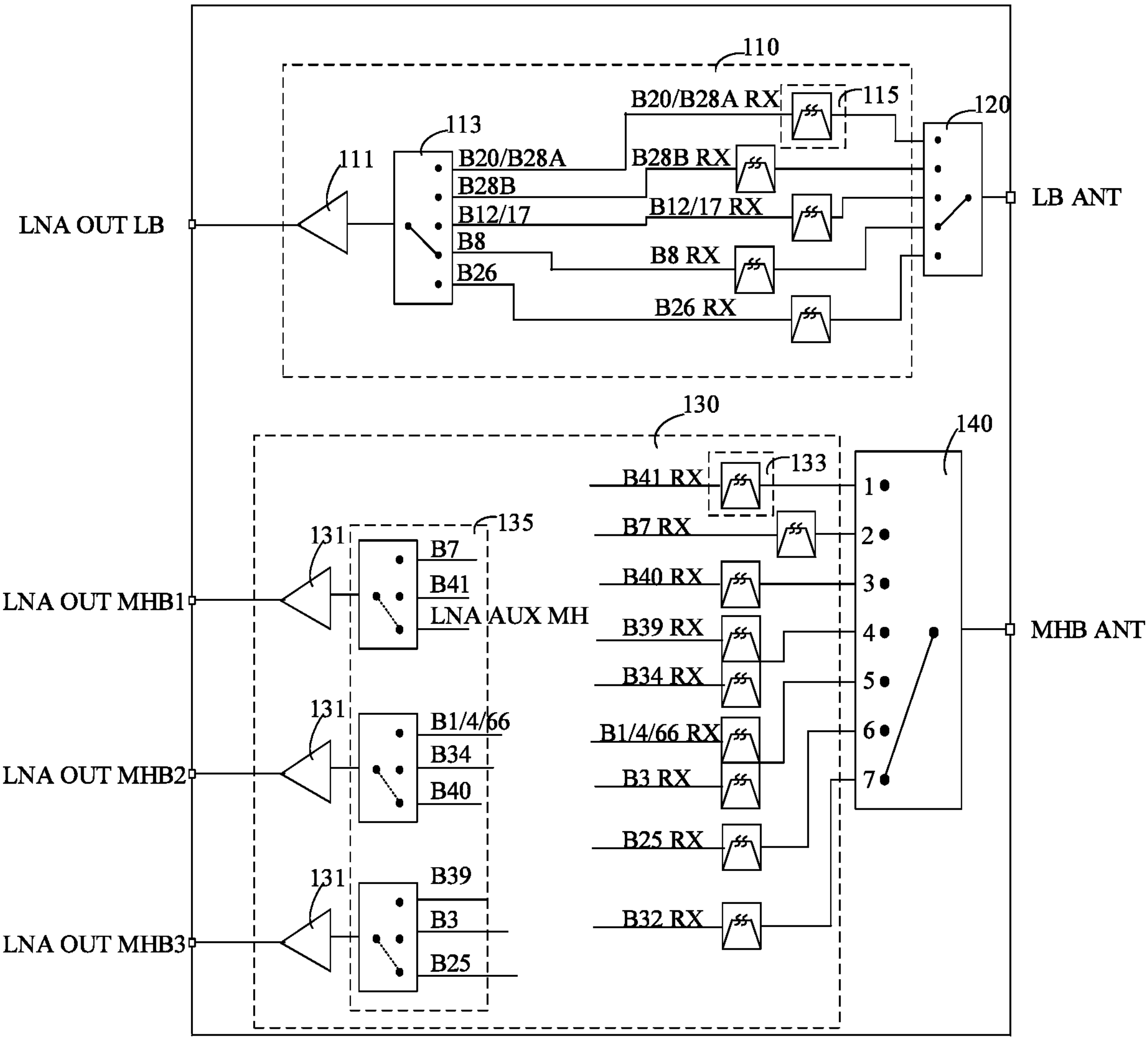
110
111
113
115
120
B20/B28A RX
B20/B28A
B28B RX
B28B
B12/17 RX
B12/17
B8 RX
B8
B26 RX
B26
LNA OUT LB
LB ANT
130
131
133
135
140
B41 RX
B7 RX
B40 RX
B39 RX
B34 RX
B1/4/66 RX
B3 RX
B25 RX
B32 RX
B7
B41
LNA AUX MH
B1/4/66
B34
B40
B39
B3
B25
LNA OUT MHB1
LNA OUT MHB2
LNA OUT MHB3
MHB ANT
1
2
3
4
5
6
7

FIG. 4

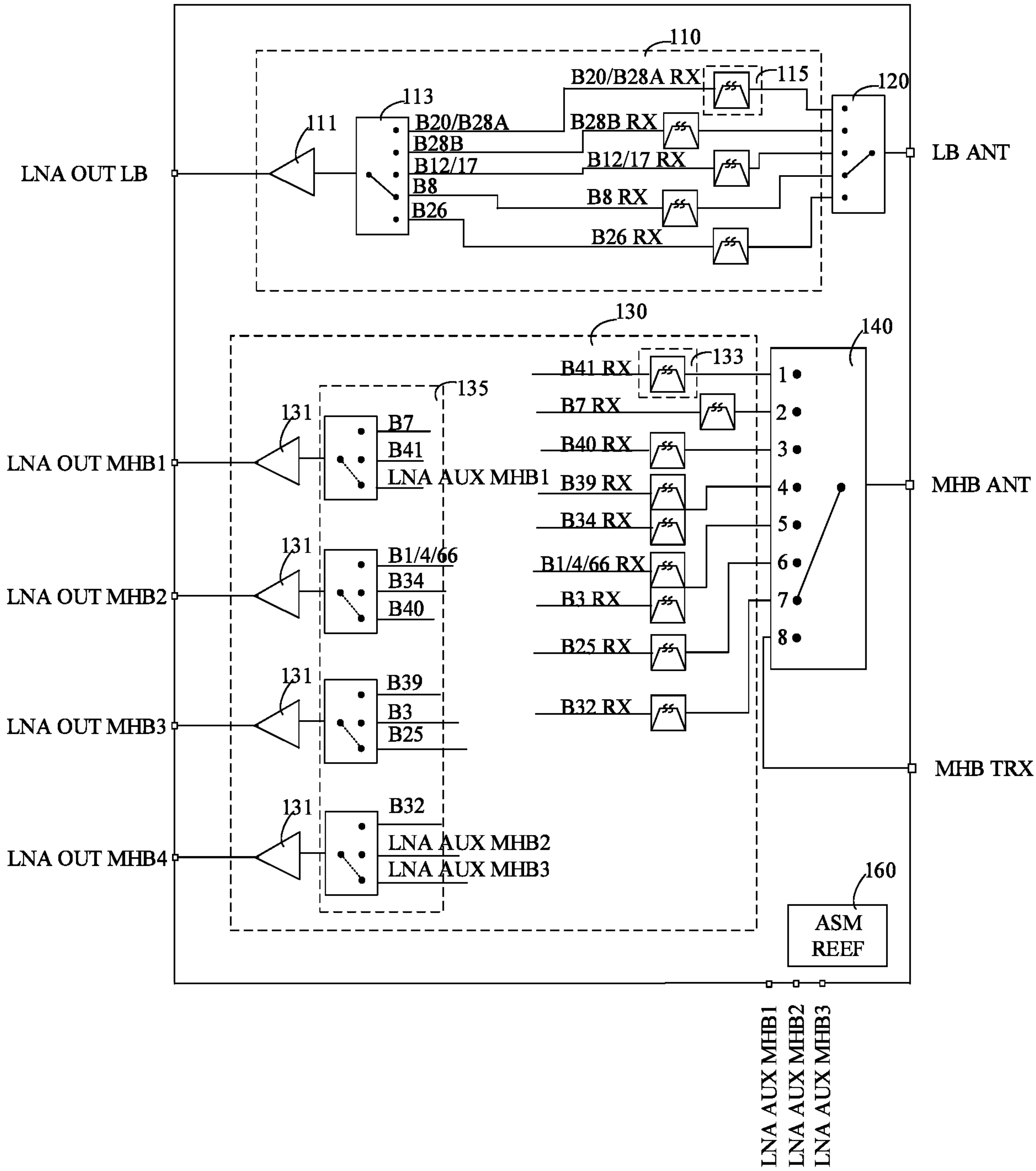

110
113
111
115
120
B20/B28A RX
B20/B28A
B28B RX
B28B
B12/17
B12/17 RX
B8
B8 RX
B26
B26 RX
LNA OUT LB
LB ANT
130
140
133
135
131
B41 RX
B7 RX
B40 RX
B39 RX
B34 RX
B1/4/66 RX
B3 RX
B25 RX
B32 RX
B7
B41
LNA AUX MHB1
B1/4/66
B34
B40
B39
B3
B25
B32
LNA AUX MHB2
LNA AUX MHB3
LNA OUT MHB1
LNA OUT MHB2
LNA OUT MHB3
LNA OUT MHB4
1
2
3
4
5
6
7
8
MHB ANT
MHB TRX
160
ASM REEF
LNA AUX MHB1
LNA AUX MHB2
LNA AUX MHB3


FIG. 5

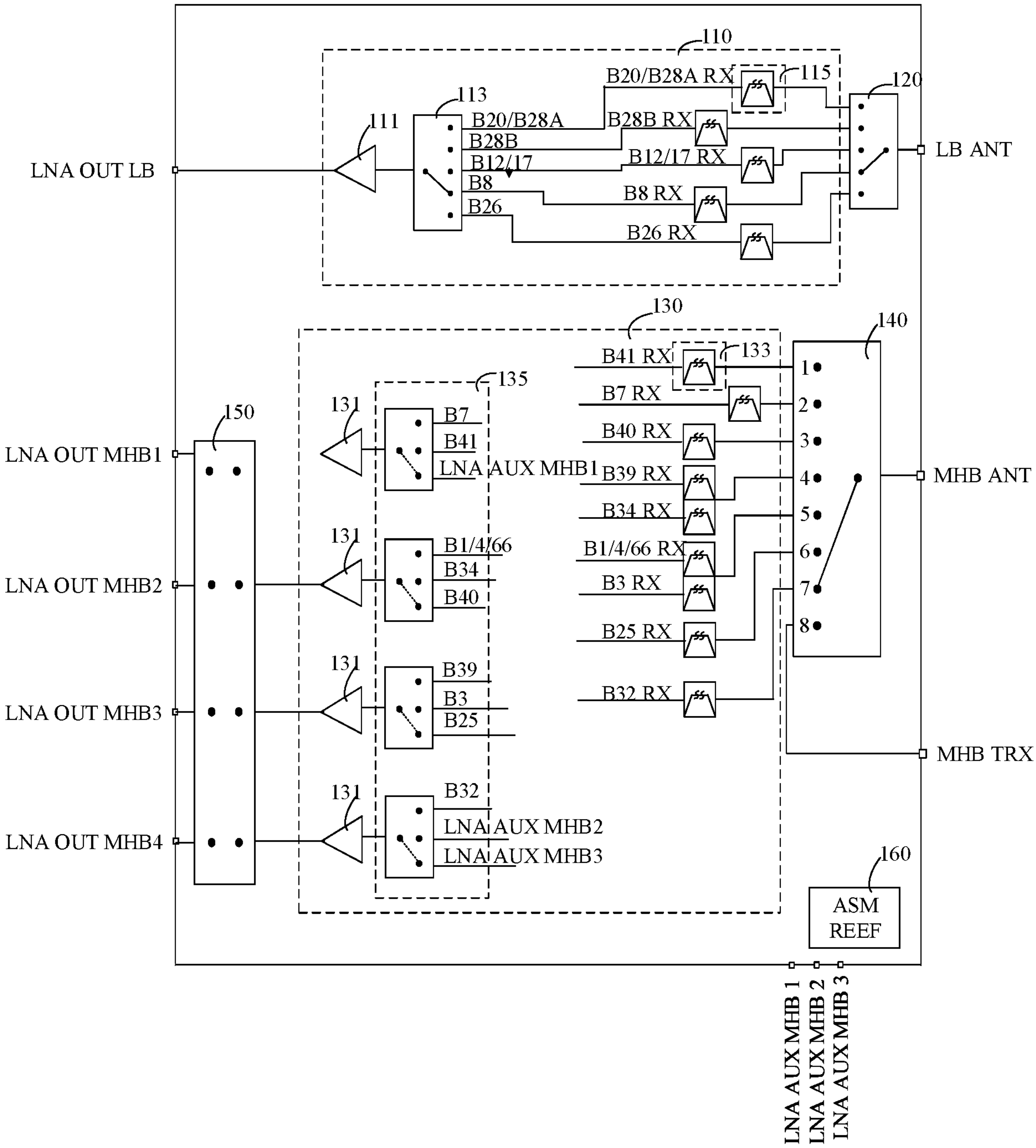
110
115
120
B20/B28A RX
113
111
B20/B28A
B28B RX
B28B
B12/17 RX
LB ANT
LNA OUT LB
B12/17
B8
B8 RX
B26
B26 RX
130
140
B41 RX
133
1
135
B7 RX
2
131
B7
150
B40 RX
3
B41
LNA OUT MHB1
LNA AUX MHB1
B39 RX
4
MHB ANT
B34 RX
5
131
B1/4/66
B1/4/66 RX
6
B34
LNA OUT MHB2
B3 RX
7
B40
B25 RX
8
131
B39
B32 RX
B3
LNA OUT MHB3
B25
MHB TRX
131
B32
LNA AUX MHB2
LNA OUT MHB4
LNA AUX MHB3
160
ASM
REEF
LNA AUX MHB 1
LNA AUX MHB 2
LNA AUX MHB 3

FIG. 6

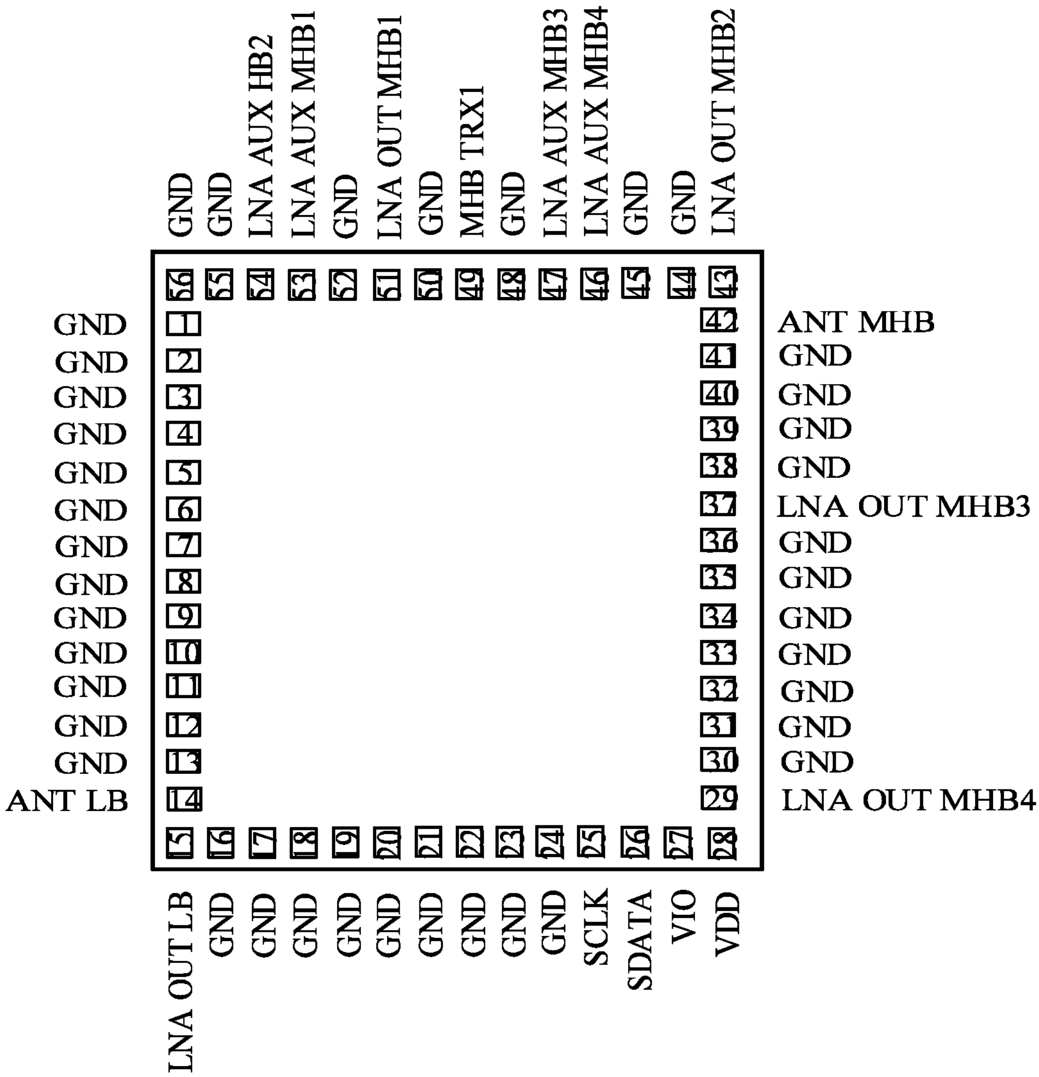
GND
GND
LNA AUX HB2
LNA AUX MHB1
GND
LNA OUT MHB1
GND
MHB TRX1
GND
LNA AUX MHB3
LNA AUX MHB4
GND
GND
LNA OUT MHB2
56 55 54 53 52 51 50 49 48 47 46 45 44 43
GND 1
GND 2
GND 3
GND 4
GND 5
GND 6
GND 7
GND 8
GND 9
GND 10
GND 11
GND 12
GND 13
ANT LB 14
42 ANT MHB
41 GND
40 GND
39 GND
38 GND
37 LNA OUT MHB3
36 GND
35 GND
34 GND
33 GND
32 GND
31 GND
30 GND
29 LNA OUT MHB4
15 16 17 18 19 20 21 22 23 24 25 26 27 28
LNA OUT LB
GND
GND
GND
GND
GND
GND
GND
GND
GND
SCLK
SDATA
VIO
VDD

FIG. 7a

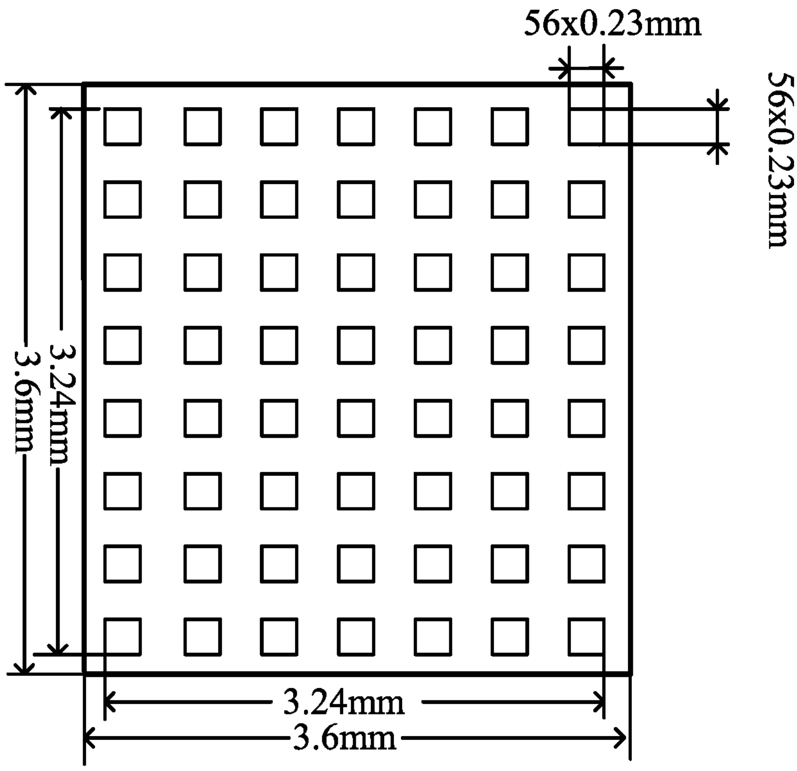


FIG. 7b

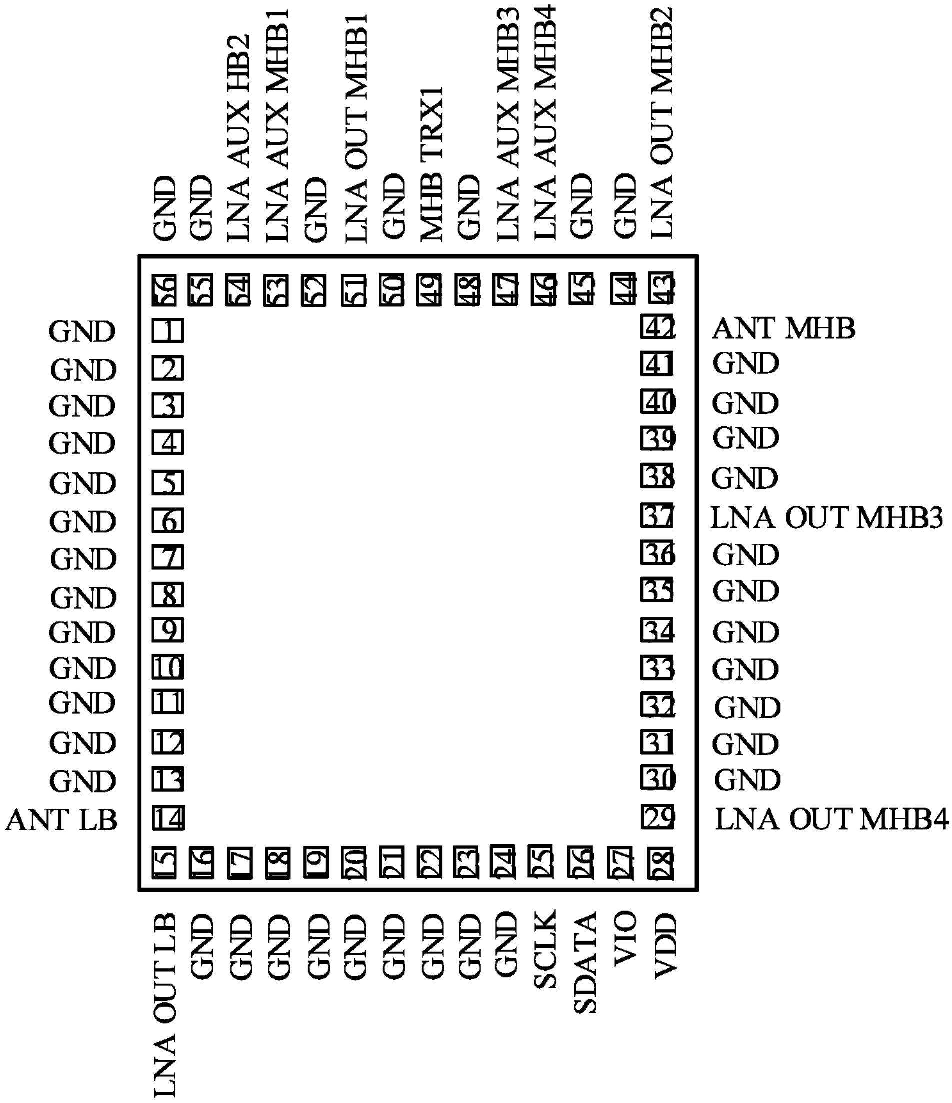
GND
GND
LNA AUX HB2
LNA AUX MHB1
GND
LNA OUT MHB1
GND
MHB TRX1
GND
LNA AUX MHB3
LNA AUX MHB4
GND
GND
LNA OUT MHB2
56
55
54
53
52
51
50
49
48
47
46
45
44
43
GND 1
GND 2
GND 3
GND 4
GND 5
GND 6
GND 7
GND 8
GND 9
GND 10
GND 11
GND 12
GND 13
ANT LB 14
42 ANT MHB
41 GND
40 GND
39 GND
38 GND
37 LNA OUT MHB3
36 GND
35 GND
34 GND
33 GND
32 GND
31 GND
30 GND
29 LNA OUT MHB4
15
16
17
18
19
20
21
22
23
24
25
26
27
28
LNA OUT LB
GND
GND
GND
GND
GND
GND
GND
GND
GND
SCLK
SDATA
VIO
VDD

FIG. 8a

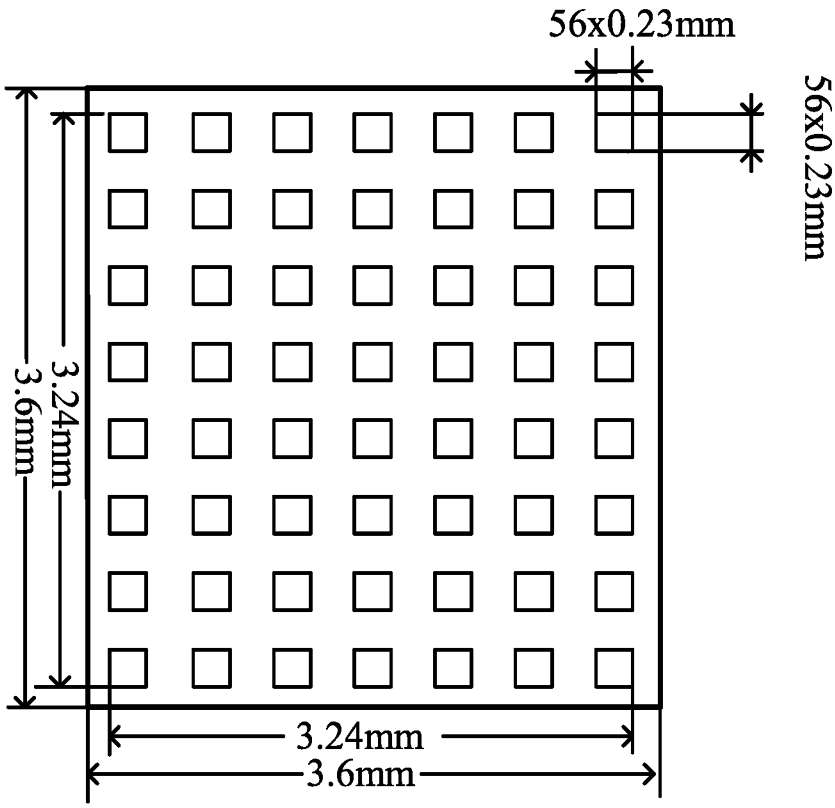


FIG. 8b

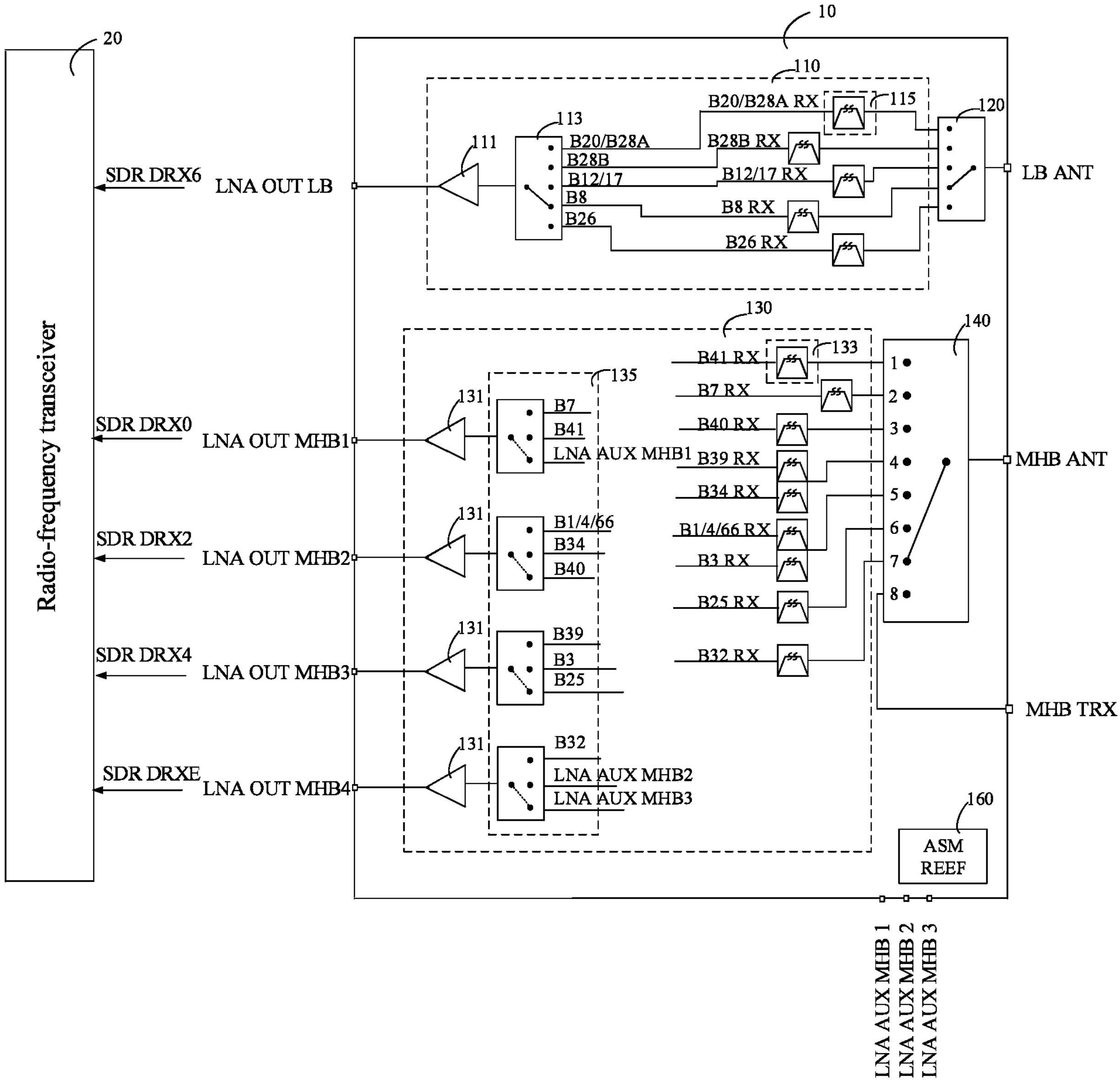
10
20
Radio-frequency transceiver
110
113
111
115
120
B20/B28A RX
B28B RX
B12/17 RX
B8 RX
B26 RX
B20/B28A
B28B
B12/17
B8
B26
SDR DRX6
LNA OUT LB
LB ANT
130
133
135
140
131
B41 RX
B7 RX
B40 RX
B39 RX
B34 RX
B1/4/66 RX
B3 RX
B25 RX
B32 RX
SDR DRX0
LNA OUT MHB1
B7
B41
LNA AUX MHB1
SDR DRX2
LNA OUT MHB2
B1/4/66
B34
B40
SDR DRX4
LNA OUT MHB3
B39
B3
B25
SDR DRXE
LNA OUT MHB4
B32
LNA AUX MHB2
LNA AUX MHB3
1
2
3
4
5
6
7
8
MHB ANT
MHB TRX
160
ASM
REEF
LNA AUX MHB 1
LNA AUX MHB 2
LNA AUX MHB 3

FIG. 9

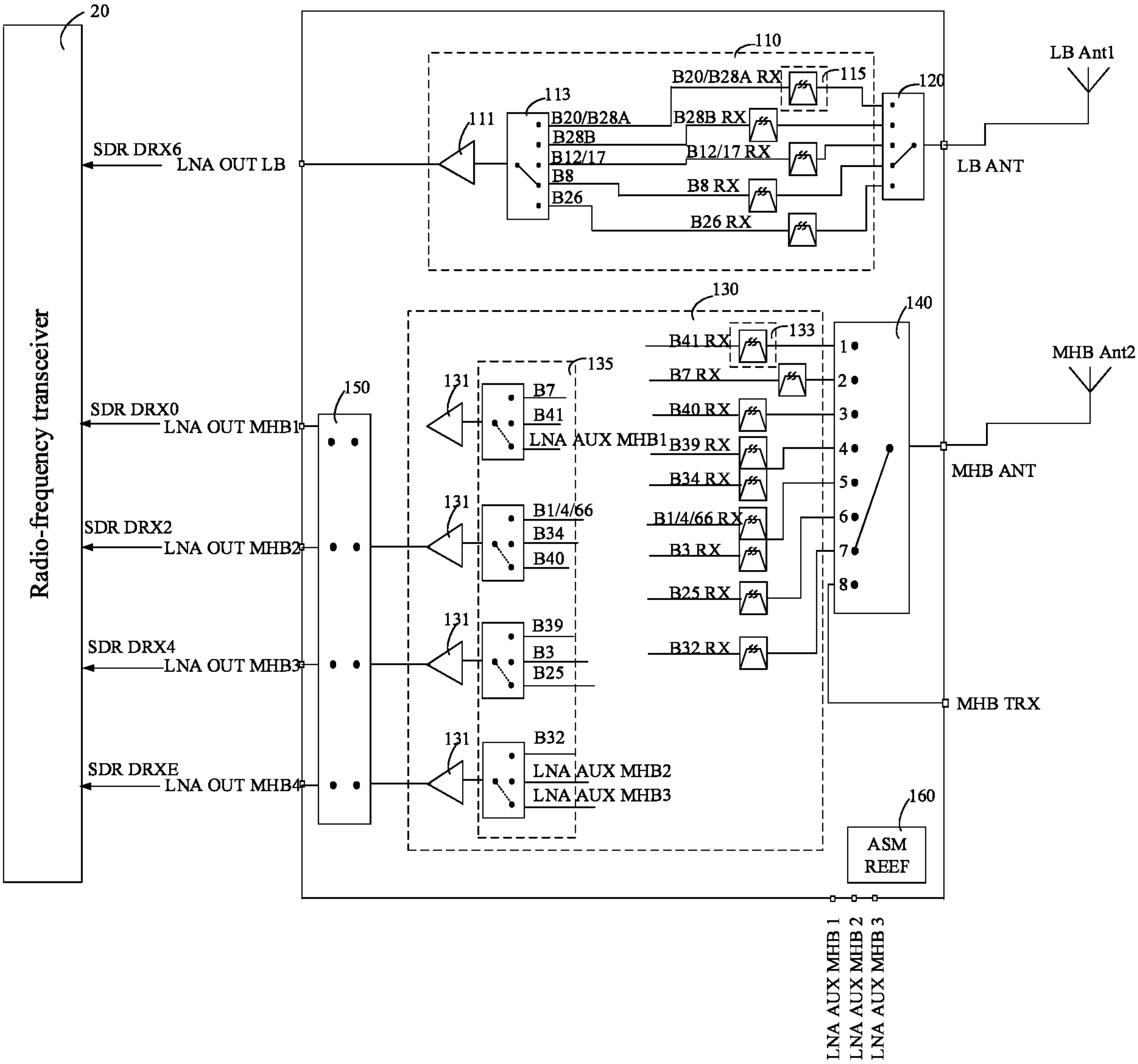
20
Radio-frequency transceiver
SDR DRX6
LNA OUT LB
SDR DRX0
LNA OUT MHB1
SDR DRX2
LNA OUT MHB2
SDR DRX4
LNA OUT MHB3
SDR DRXE
LNA OUT MHB4
110
111
113
115
120
B20/B28A
B28B
B12/17
B8
B26
B20/B28A RX
B28B RX
B12/17 RX
B8 RX
B26 RX
LB Ant1
LB ANT
130
131
133
135
140
150
B7
B41
LNA AUX MHB1
B1/4/66
B34
B40
B39
B3
B25
B32
LNA AUX MHB2
LNA AUX MHB3
B41 RX
B7 RX
B40 RX
B39 RX
B34 RX
B1/4/66 RX
B3 RX
B25 RX
B32 RX
1
2
3
4
5
6
7
8
MHB Ant2
MHB ANT
MHB TRX
160
ASM REEF
LNA AUX MHB 1
LNA AUX MHB 2
LNA AUX MHB 3

FIG. 10

**INTERNATIONAL SEARCH REPORT**

International application No.
**PCT/CN2021/106194**

**A. CLASSIFICATION OF SUBJECT MATTER**

H04B 1/00(2006.01)i；H04B 1/40(2015.01)i

According to International Patent Classification (IPC) or to both national classification and IPC

**B. FIELDS SEARCHED**

Minimum documentation searched (classification system followed by classification symbols)

H04B1

Documentation searched other than minimum documentation to the extent that such documents are included in the fields searched

Electronic data base consulted during the international search (name of data base and, where practicable, search terms used)

CNABS, CNTXT, CNKI: 分集接收, 滤波, 低噪声放大, 低噪放, 开关, 切换, 天线, 频段, 频带, 多, 不同, 中频, 高频, 低频 VEN, USTXT, WOTXT, EPTXT: DRX, diversity receive, filter+, LNA, low noise amplifier, switch+, antenna?, band?, frequency, different, multiple, low band, midband, high band, LB, MB, HB

**C. DOCUMENTS CONSIDERED TO BE RELEVANT**

| Category* | Citation of document, with indication, where appropriate, of the relevant passages | Relevant to claim No. |
|---|---|---|
| X | CN 110324053 A (HEWLETT PACKARD ENTERPRISE DEVELOPMENT LP) 11 October 2019 (2019-10-11) description, paragraphs [0006]-[0035], and figure 1 | 1-17 |
| X | CN 1890898 A (INTEL CORPORATION) 03 January 2007 (2007-01-03) description, pages 7-9, and figure 1 | 1-17 |
| A | CN 206657863 U (APPLE INC.) 21 November 2017 (2017-11-21) entire document | 1-17 |
| A | US 2018278275 A1 (SKYWORKS SOLUTIONS INC.) 27 September 2018 (2018-09-27) entire document | 1-17 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 September 2021** | **14 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/106194**

| Patent document cited in search report | | | Publication date (day/month/year) | Patent family member(s) | | | Publication date (day/month/year) |
|---|---|---|---|---|---|---|---|
| CN | 110324053 | A | 11 October 2019 | EP | 3547792 | A1 | 02 October 2019 |
| | | | | US | 2019306805 | A1 | 03 October 2019 |
| | | | | US | 10439655 | B1 | 08 October 2019 |
| CN | 1890898 | A | 03 January 2007 | CN | 1890898 | B | 18 August 2010 |
| | | | | US | 2005079847 | A1 | 14 April 2005 |
| | | | | TW | I256787 | B | 11 June 2006 |
| | | | | EP | 1680872 | A1 | 19 July 2006 |
| | | | | US | 7116952 | B2 | 03 October 2006 |
| | | | | WO | 2005036778 | A1 | 21 April 2005 |
| | | | | TW | 200518498 | A | 01 June 2005 |
| CN | 206657863 | U | 21 November 2017 | US | 9391570 | B2 | 12 July 2016 |
| | | | | WO | 2016011197 | A3 | 10 March 2016 |
| | | | | WO | 2016011197 | A2 | 21 January 2016 |
| | | | | US | 2016020737 | A1 | 21 January 2016 |
| US | 2018278275 | A1 | 27 September 2018 | US | 2020287575 | A1 | 10 September 2020 |
| | | | | US | 10608679 | B2 | 31 March 2020 |
| | | | | US | 2020321989 | A1 | 08 October 2020 |
| | | | | US | 2018278276 | A1 | 27 September 2018 |
| | | | | US | 10581467 | B2 | 03 March 2020 |
| | | | | US | 10911075 | B2 | 02 February 2021 |
| | | | | US | 10965329 | B2 | 30 March 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2020110327848